# EUROPEAN PATENT APPLICATION

(11) **EP 1 489 785 A1**
(43) Date of publication of application: **22.12.2004**
(21) Application number: 03701861.1
(22) Date of filing: 24.01.2003
(51) Int. Cl.: H04L 12/56, H04L 12/18, H04L 29/14

(54) **BROADCAST COMMUNICATING APPARATUS, METHOD AND SYSTEM, AND PROGRAM THEREOF, AND PROGRAM RECORDING MEDIUM**

(30) Priority: 30.01.2002 JP 2002020861
(71) Applicant: PFU Limited, Kahoku-shi, Ishikawa 929-1192 (JP)
(72) Inventor: ARAYA, Yoshinobu, PFU LIMITED, Kahoku-gun, Ishikawa 929-1192 (JP); MATSUMOTO, Eiji, PFU LIMITED, Kahoku-gun, Ishikawa 929-1192 (JP)
(74) Representative: Reichel, Wolfgang, Dipl.-Ing.
(86) International application number: PCT/JP2003/000654
(87) International publication number: WO 2003/065662

(57) **Abstract**

A multicast communication apparatus 1 has a multicast processing unit 11 to transmit by multicast one or a plurality of data to a plurality of receiving terminals 3, a retransmission request receiving unit 12 to receive a request for retransmission which specifies at least one data out of the one or the plurality of data transmitted by the multicast and which is transmitted by unicast from any one of the plurality of receiving terminals 3, and a retransmission processing unit 13 to transmit by the unicast the specified data in the request for retransmission to the any one of the plurality of receiving terminals 3 which transmitted the request for retransmission.

## Description

### Technical Field

This invention relates to an apparatus, method and system for multicasting, and program and recording medium thereof, and more particularly to an apparatus, method and system for multicasting, and program and recording medium thereof, in which it is possible to minimize communication loads which are generated by retransmission of lost data in a multicast.

### Background Art

When a transmitting terminal transmits the same data to a plurality of receiving terminals (computers which receives the data) at the same time (or in multicast communication), the data is transmitted in a form of datagram packet (unit of data), in which the proper order and integrity of the data is not ensured. Namely, the multicast communication does not depend on TCP/IP (Transmission Control Protocol/Internet Protocol) or the protocol for point-to-point communication. Therefore, the multicast communication cannot ensure the proper order and integrity of data. Specifically, the multicast communication depends on UDP/IP (User Datagram Protocol/Internet Protocol) or the protocol for the multicast communication, and the datagram packets are allowed to freely flow on the network while the datagram packets are copied each time they pass through routers. For this reason, when considering a plurality of the packets, there is a case in which the receiving order of packets may be different from the transmitting order of the packets due to the difference of the route, or there is a case in which data may be lost (or missed) on the network while the packets pass through a plurality of routers.

Thus, in a case that the above data lost is occurred in a process of the multicasting the data, one or a plurality of receiving terminals which find out the data lost transmit a request for retransmission of the lost data by the multicast to the transmitting terminal. When receiving the request, the transmitting terminal multicasts again the requested data according to the request. The one or plurality of receiving terminals which sent the request for retransmission recover the lost data by receiving the data multicast again.

Conventionally, as described above, when the multicast data is lost, the communication to recover is performed by the multicast. Thus, the following problem has been occurred. The request for retransmission and retransmitted data are also multicast to a network to which receiving terminals in which the data has not been lost belongs. In this case, the request for retransmission and retransmitted data are completely unnecessary for the above network, thereby unnecessary load of communication is generated for the above network. This unnecessary load of communication is not worthy to be considered in such network that an actual load of communication is not very big problem (a network in universities and research institutes, for embodiment). However, in a network which is actually used in a company or the like, it is desirable to reduce the load of communication since communication charges are imposed according to the communication quantity, and unnecessary communication should not be performed from a view of security.

Further, when the multicast communication has been started, a new receiving terminal newly connects and receives multicast data after the start of communication (newly participating receiving terminal), but can not recover in any way the data that has been already multicast until that time. Then, once multicast communication starts, a new receiving terminal is practically rejected its entry to the multicast network in the middle of the communication, when the new receiving terminal needs whole data.

It is an object of the present invention to provide a multicast apparatus which increases efficiency of multicast communication and reduce load of communication which is occurred by retransmitting data.

It is another object of the present invention to provide a multicast method which increases efficiency of multicast communication and reduce load of communication which is occurred by retransmitting data.

It is further object of the present invention to provide a multicast system which increases efficiency of multicast communication and reduce load of communication which is occurred by retransmitting data.

It is still further object of the present invention to provide a multicasting program which increases efficiency of multicast communication and reduce load of communication which is occurred by retransmitting data.

It is still further object of the present invention to provide a multicasting program recording medium which increases efficiency of multicast communication and reduce load of communication which is occurred by retransmitting data.

### Disclosure of Invention

A multicast communication apparatus of the present invention has a multicast processing unit to transmit by multicast one or a plurality of data to a plurality of receiving terminals, a retransmission request receiving unit to receive a request for retransmission which specifies at least one data out of the one or the plurality of data transmitted by the multicast and which is transmitted by unicast from any one of the plurality of receiving terminals, and a retransmission processing unit to transmit by the unicast the specified data in the request for retransmission to the any one of the plurality of receiving terminals which transmitted the request for retransmission.

A multicast communication method of the present invention has transmitting by the multicast one or a plurality of data to a plurality of receiving terminals, receiving a request for retransmission which specifies at least one data out of the one or plurality of data transmitted by the multicast and which is transmitted by unicast from any one of the plurality of receiving terminals, and transmitting by the unicast the specified data in the request for retransmission to the any one of the plurality of receiving terminals which transmitted the request for retransmission.

A multicast communication system of the present invention has a multicast communication apparatus, and a plurality of receiving terminals connected thereto. Each of the plurality of receiving terminals receives one or a plurality of data transmitted by the multicast from the multicast communication apparatus, and, when any one of the one or plurality of data is lost, transmits by the unicast a request for retransmission which specified the lost data. The multicast communication apparatus further has a multicast processing unit to transmit by multicast the one or plurality of data to the plurality of receiving terminals, a retransmission request receiving unit to receive the request for retransmission which is transmitted by unicast from any one of the plurality of receiving terminals, and a retransmission processing unit to transmit by the unicast the specified data in the request for retransmission to the any one of the plurality of receiving terminals which transmitted the request for retransmission.

According to the multicast communication apparatus, method and system of the present invention, transmission of data is performed by the multicast, and the communication to recover the data when the data is lost is performed by the unicast, not by the multicast. Then, when any one of the plurality of receiving terminals finds the data is lost, the communication to recover the lost data only between the multicast communication apparatus and the receiving terminals. Accordingly, the request for retransmission and the retransmitted data, which are unnecessary data, are not multicast to the network to which the receiving terminals in which the data is not lost belongs. By this feature, in a network which is actually used in a company or the like, it is possible to prevent from generating the load of unnecessary communication, to prevent from imposing communication charges due to unnecessary communication, and to improve the security. In addition, when data transmission by the multicast has been already started, it is possible to retransmit the data which has been already multicast by accepting the request for retransmission to the new receiving terminal (the newly participating receiving terminal). As a result of this, it is possible for the newly participating receiving terminal to successfully participate to the multicast network in the middle of the multicast communication.

A program of the present invention is to realize a multicast communication system. The program has the steps which cause a computer to execute transmitting by multicast one or a plurality of data to a plurality of receiving terminals, receiving a request for retransmission which specifies at least one data out of the one or the plurality of data transmitted by the multicast and which is transmitted by unicast from any one of the plurality of receiving terminals, and transmitting by the unicast the specified data in the request for retransmission to the any one of the plurality of receiving terminals which transmitted the request for retransmission.

According to the multicast communication program of the present invention it is possible to realize the multicast communication apparatus, method and system described above. Accordingly, the request for retransmission and the retransmitted data, which are unnecessary data, are not multicast to the network to which the receiving terminals in which the data is not lost belongs. By this feature, in a network which is actually used in a company or the like, it is possible to prevent from generating the load of unnecessary communication, to prevent from imposing communication charges due to unnecessary communication, and to improve the security. In addition, when data transmission by the multicast has been already started, it is possible to retransmit the data which has been already multicast by accepting the request for retransmission to the new receiving terminal (the newly participating receiving terminal). As a result of this, it is possible for the newly participating receiving terminal to successfully participate to the multicast network in the middle of the multicast communication.

A program recording medium of the present invention is to record a program for realizing a multicast communication apparatus, and records the above multicast communication program.

According to the program recording medium recording the multicast communication program of the present invention can provide the above multicast communication program by storing into the recording media such as a flexible disk, CD-ROM, CDR/W, DVD, etc., or downloading from the Internet, so that it is easy to realize the multicast communication apparatus, method and system described above.

### Brief Description of the Drawings

FIGS. 1A and 1B show a structure of a multicast communication system.
FIG. 2 illustrates processing of multicast communication.
FIG. 3 illustrates processing of multicast communication.
FIG. 4 illustrates one embodiment of algorithm.
FIGS. 5A and 5B illustrate one embodiment of algorithm.
FIGS. 6A, 6B, 6C and 6D represent a flowchart of communication processing in a multicast communication apparatus.
FIG. 7 is a flowchart of control processing of transmission rate.
FIG. 8 is a flowchart of receive processing in each of receiving terminals.
FIG. 9 shows another structure of a multicast communication system.
FIG. 10 shows still another structure of a multicast communication system.
FIG. 11 is a flowchart of start processing of receiving multicast data in a receiving terminal newly participating.

### Best Mode for Carrying out the Invention

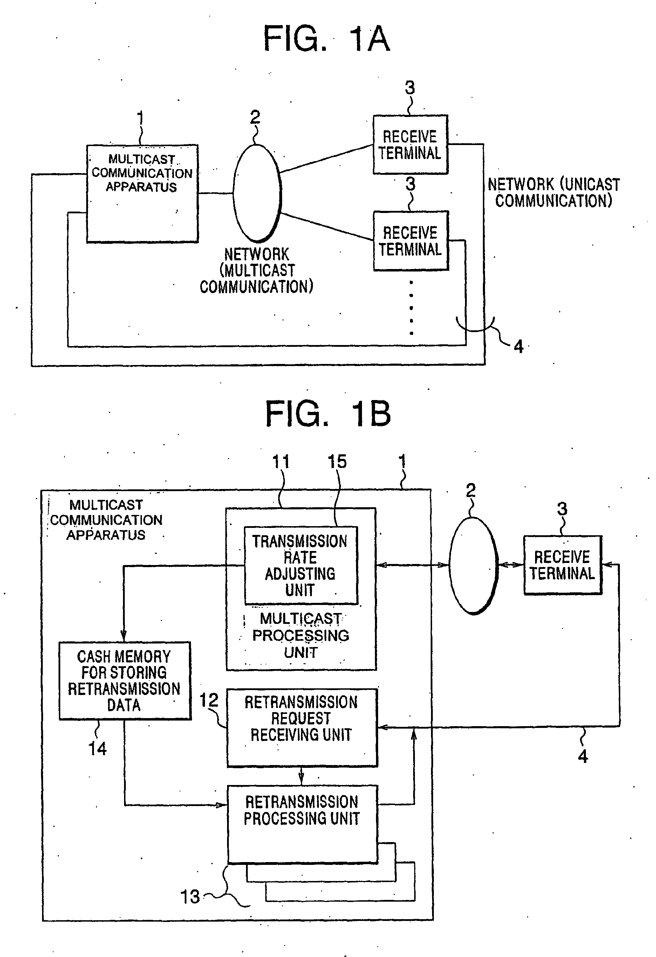

FIG. 1 shows the structure of a multicast communication system or a multicast communication system including a multicast communication apparatus of the present invention.

As shown in FIG. 1A, the multicast system has a multicast communication apparatus 1 and a plurality of receiving terminals 3. The multicast communication apparatus 1 is a computer (or a server) which transmits data by the multicast. Each of receiving terminal 3 is a computer (or client) which receives data transmitted by the multicast communication apparatus 1 by the multicast. In this embodiment, multicast is performed as a multicast communication according to UDP/IP, so that data (datagram packets) are allowed to freely flow on a network while the data are copied each time they pass through routers (not illustrated). Thus, the multicast communication apparatus 1 is connected to each of the plurality of receiving terminals 3 through a network 2 of a multicast communication, and thereby they constitute a multicast communication group.

Each of the receiving terminals 3 receives one or a plurality of data (datagram packet or packets) transmitted from the multicast communication apparatus 1 by the multicast. And, in a case that data is lost, each of the receiving terminals 3 transmits a request for retransmission, in which the lost data is specified, to the multicast communication apparatus 1 by the unicast. For this purpose, the multicast communication apparatus 1 and each of the plurality of receiving terminals 3 are connected through a network 4 of unicast communication. The network 4 is commonly shared by the plurality of receiving terminals 3. The network 4 may be physically identical with the network 2.

As shown in FIG. 1B, the multicast communication apparatus 1 has a multicast processing unit 11, a retransmission request receiving unit 12, a retransmission processing unit 13 and a retransmission cash memory 14. The multicast processing unit 11 has a transmission rate adjusting unit 15.

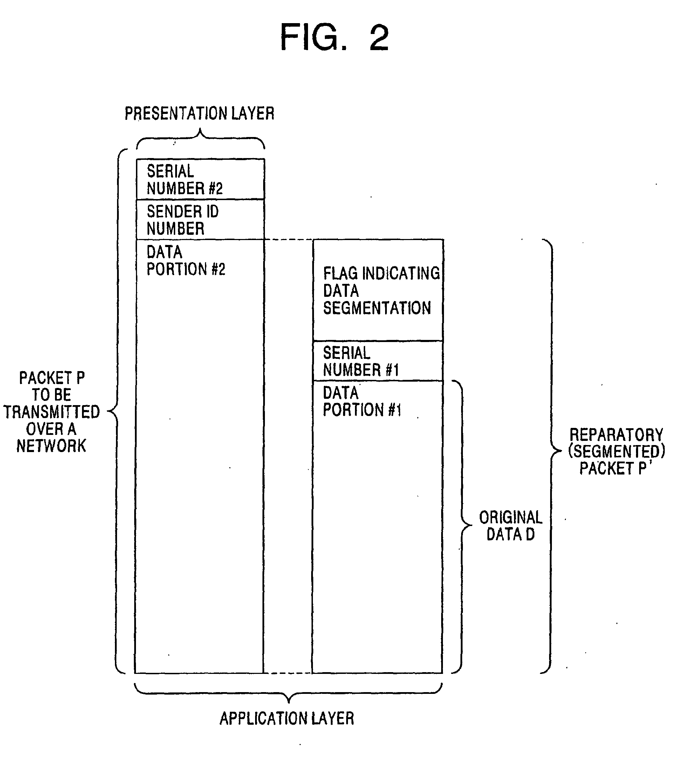

The multicast processing unit 11 transmits one or a plurality of data by the multicast to the plurality of receiving terminals 3 through the network 2. For this purpose, the multicast processing unit 11 has a port for the multicast communication. And, the multicast processing unit 11 stores the data transmitted in the retransmission cash memory 14. As shown in FIG. 2, the multicast processing unit 11 make the data the form of the datagram packets, which is well known, according to UDP/IP, and attaches serial numbers (packet numbers) to the packets from "1" successively. The serial number is unique to specify the packet.

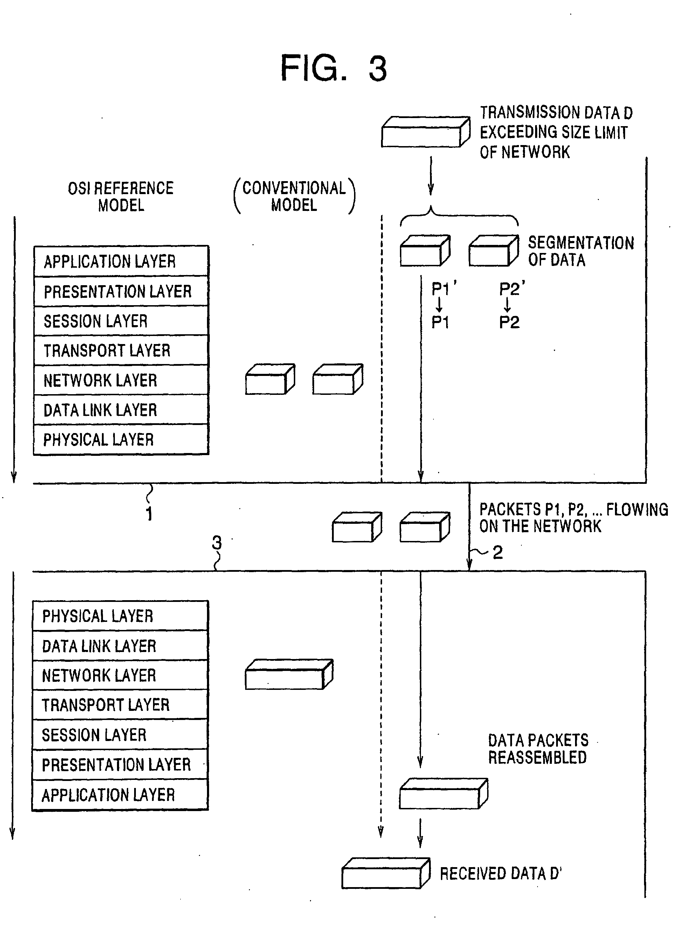

As shown in FIGS. 2 and 3, when the data D to be transmitted have a size exceeding a predetermined quantity (for embodiment, about 1500 bytes), the multicast processing unit 11 divides the data into a plurality of packets. That is, in the application layer or the like of the OSI (Open Systems Interconnection) reference model, the multicast processing unit 11 divides the data D into the plurality of packets P1, P2, ..., each of which has a predetermined size, and attaches serial numbers to each of the packets. These serial numbers are also unique to specify the packets. Each of the receiving terminals 3 combines the received packets P1, P2, ..., which are divided into the plurality of packets according to their attached serial numbers in its own application layer, thereby obtains (recovers) data D'.

As shown in FIG. 2, the "data portion #1" represents data D (data which is originally intended to transmitted) in an upper level application program. A "flag specifying the presence of data division" and "serial number #1", which is effective among the divisional data, are attached to the "data portion #1" to obtain one preparatory packet P' (P1', for example). Then, the preparatory packet P' itself is regarded as a "data portion #2." "Serial number #2", which is effective among the transmitting processing, and a "transmitting terminal identifying number", by which the transmitting terminal is uniquely identified, are attached to the "data portion #2" to obtain a packet P (P1, for example). The packet P1 which flows on the network is transmitted onto the network 2. Accordingly, as shown in FIG. 3, when the size of the "data portion #1" exceeds a size prescribed by the netwwork media, the multicast processing unit 11 divides "data portion #1" from its head into a plurality of preparatory packets, each of which has a the prescribed size, and one preparatory packet which is the lastly remaining portion of "data portion #1" and has a size less than the prescribed size. These preparatory packets are assigned serial numbers #1-1, #1-2, #1-3, ..., for example. Thus, "data portion #1" is divided into preparatory packets in the application layer of the OSI reference model. Then, in the presentation layer, a "serial number #2" is attached to each of the divided preparatory packets. Then, the divided data flows on the network2, and each of receiving terminals 3 combines the divided data in the application layer to recover the data.

Conventionally, as is indicated by the dotted line in FIG. 3, when the "data portion #1" exceeds the prescribed size by the network media, data division and data combination are performed in the network layer of the OSI reference model.

The retransmission request receiving unit 12 receives a request for retransmission transmitted by the unicast from any one of the plurality of receiving terminals 3 through the network 4. For this purpose, the retransmission request receiving unit 12 has a port for unicast communication. When receiving the request for retransmission, the retransmission request receiving unit 12 generates a thread to perform the retransmission processing unit 13, and the thread processes the request for retransmission. That is, each time the retransmission request receiving unit 12 receives the request for retransmission, it generates the thread which performs the retransmission processing unit 13 (or activates the retransmission processing unit 13).

In the request for retransmission, the data to be retransmitted is identifies as follows. Assuming that the packets of first lost data is assigned with a serial number "100," and then packets (data) having serial numbers "102," "104," and "107" are also lost. In this case, the receiving terminal 3 describes "100" at the predetermined position in the request for retransmission and, following this, "010100100..." are described. That is, bit "1" appears at the 2nd, 4th and 7th positions subsequent to the number 100. This indicates that the packets. (data) having a serial number 100 etc. have been lost.

The retransmission processing unit 13 transmits by the unicast the data specified in the request for retransmission to a plurality of the receiving terminals 3 which transmitted the request for retransmission through the network 4. More specifically, the retransmission processing unit 13 read out the data specified in the request for retransmission which is to be performed in the thread from the data retransmission cash memory 14, and transmits it again by the unicast only to the receiving terminals 3 which transmitted the request for retransmission. The retransmission processing unit 13 newly opens a port, which is distinct from the port or the retransmission receiving unit 12, for the unicast communication which is use by the retransmission processing unit 13 itself (or newly provides a datagram socket for retransmitting).

The data transmission rate (or transmission speed) by the multicast communication is adjusted by the transmission rate adjusting unit 15 to an appropriate value. Specifically, the transmission rate adjusting unit 15 realizes a specified data transmission rate by adjustment of the data transmission rate successively in order that the data transmission rate approximates to the specified rate input from outside of the multicast communication apparatus 1. This processing can realize by executing a predetermined algorithm by an operating system (OS), using a cheep timer (accordingly timer not being necessarily highly precise).

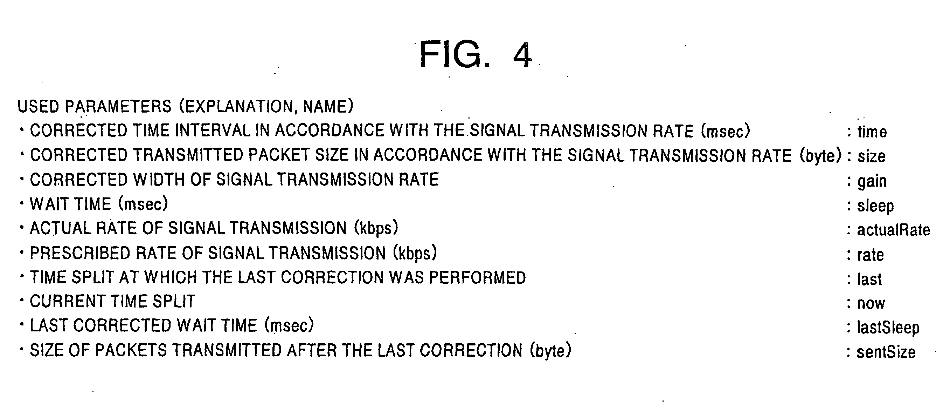

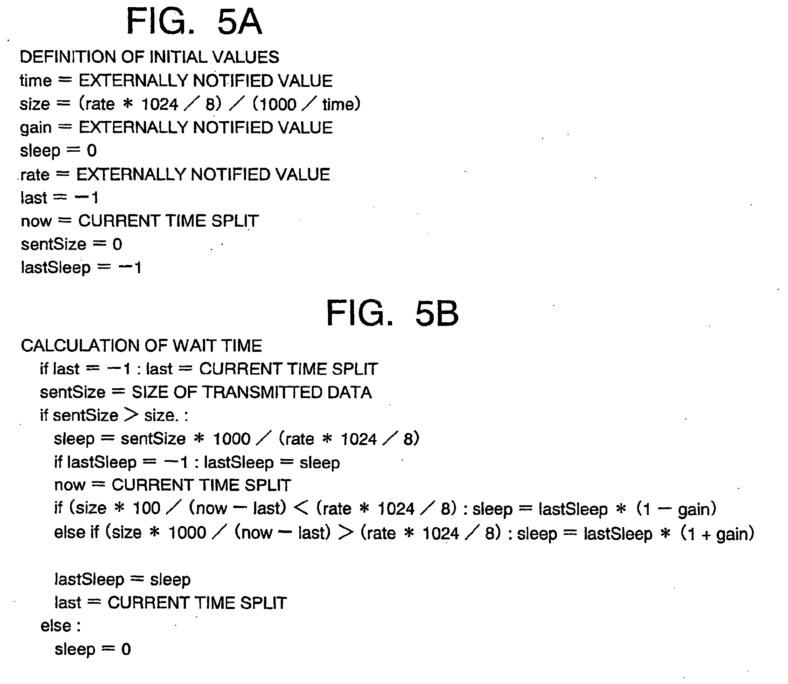

FIGS. 4 and 5 show an example of algorithm which is executed by the transmission rate adjusting unit 15.

FIG. 4 shows names of variables (and their explanations) used in the algorithm. In FIG. 4, "time," "size," "gain," and "rate" are variables to be set, respectively. "Sleep," "actualRate," "last," "now," "lastSleep," and "sentSize" are variables which will be changed moment to moment during the transmission, respectively. FIG. 5A shows the definitions of the initial values of the variables used in the algorithm. The initial values of the variables shown in FIG. 4 are defined as shown in FIG. 5A. These initial values are used in the algorithm as shown in FIG. 5B, and are changed from moment to moment, respectively.

FIG. 5B shows the calculation of wait (or rendezvous) time in the algorithm, that is, the processing for adjusting the wait time. As seen from FIG. 5B, in this embodiment, the processing for adjustment of the transmission rate adjusts each intervals of the transmission so as to delay a returning time to transmission (or wait time). Then, the transmission rate which is obtained as a result of this processing is adjusted. Specifically, when the current time comes at predetermined time (at the sixth row), the transmission rate is adjusted as follow. When the actual transmission rate at that time is smaller than the prescribed transmission rate, a new wait time "sleep" is set which is obtained by calculation to give a shortened wait time. That is, the lastly corrected wait time "lastSleep" is multiplied with "(1-gain)", (at the seventh row). On the contrary, when the actual transmission rate at that time is larger than the prescribed transmission rate, a new wait time "sleep" is set which is obtained by calculation to give a lengthened wait time. That is, the lastly corrected wait time "lastSleep" is multiplied with (1+gain), (at the eighth row). Incidentally, when the actual transmission rate is equal to the prescribed transmission rate, the value of "sleep" still takes the value of "lastSleep" (not changed).

By similar processing, the transmission rate is adjusted when the receiving terminals 3 transmit by the unicast the request for retransmission, and when the multicast communication apparatus 1 transmits by the unicast the requested data which is specified in the request for retransmission. Namely, although not illustrated here, both the receiving terminal 3 and the retransmission processing unit 13 of the multicast communication apparatus 1 have transmission rate adjusting unit similar to the transmission rate adjusting unit 15.

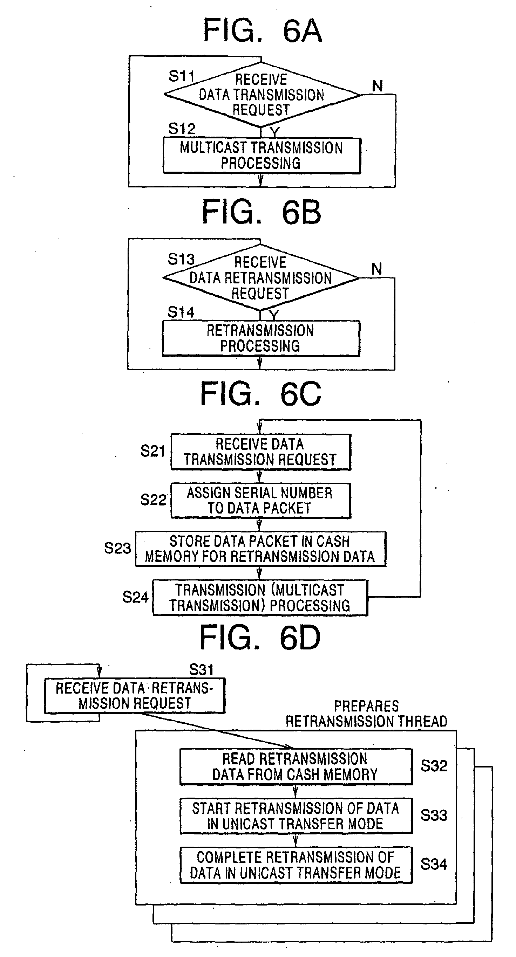

Figs 6A and 6B show a flowchart of transmission processing in the multicast communication apparatus 1. In FIG. 6A, the multicast processing unit 11 decides whether it accepts (or receives) the request for transmission from an upper level application (program) which has a object of transmission (step S11). When the multicast processing unit 11 accepts the request for transmission, the multicast processing unit 11 performs the processing of the multicast communication as shown in FIG. 6C (step S12). When the multicast processing unit 11 does not accept the request for transmission, the multicast processing unit 11 omits the step S12, but repeats the step S11 and succeeding steps. As shown in FIG. 6B, the retransmission request receiving unit 12 decides whether it accepts the request for retransmission by the unicast from any one of the plurality of receiving terminals 3 (step S 13). When the retransmission request receiving unit 12 accepts the request for retransmission, the retransmission request receiving unit 12 generates the thread in which the retransmission processing unit 13 is performed. Then, the retransmission processing unit 13 performs the processing of the retransmission as shown in FIG. 6D (step S14). When the request for retransmission is not accepted in the step S13, the retransmission processing unit 13 omits the step S14, but repeats the step S 13 and succeeding steps. Incidentally, the steps S11 and S13 are executed in parallel.

FIG. 6C shows a flowchart of the multicast communication processing executed by the multicast processing unit 11. When the multicast processing unit 11 receives the request for transmission by the multicast from the upper layer application (program) (step S21), the multicast processing unit 11 generates the packets (datagram packets) of the data to be transmitted, as described above in FIGS. 2 and 3, and assigns the serial numbers to the packets (step S22). Then, the multicast processing unit 11 stores the packets in the retransmission data cash memory 14 (step S23), adjusts the transmission rate, and transmits the packets to the plurality of receiving terminals 3 by the multicast (step S24).

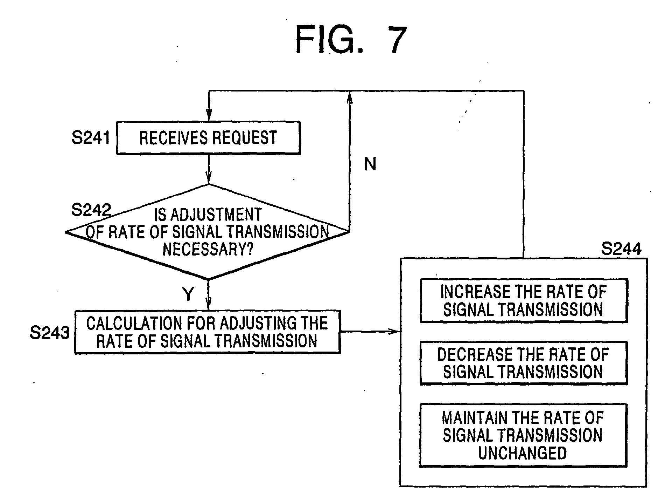

The data transmission rate in the step S24 is adjusted by the flowchart of transmission rate processing shown in FIG. 7. In the step S24, when the transmission rate adjusting unit 15 receives a request for adjusting the transmission rate from the multicast processing unit 11 (step S241), the transmission rate adjusting unit 15 decides whether the transmission rate should be adjusted by the algorithm shown in FIG. 5B (step S242). When the adjustment is not needed, the transmission rate adjusting unit 15 repeats the step S241 and succeeding steps. When the adjustment is needed, the transmission rate adjusting unit 15 executes calculations for adjusting the transmission rate by the algorithm shown in FIG. 5B (step S243), and adjusts the transmission rate according to the calculation result (step S244). Specifically, when the actual transmission rate is undesirably slow, the transmission rate is increased. When the actual transmission rate is undesirably fast, the transmission rate is decreased. And, when the actual transmission rate is in a proper range, the transmission rate is not changed. Incidentally, the steps S242 to S244 are performed concurrently by the algorithm shown in FIG. 5B as described above.

FIG. 6D shows a flowchart of receiving processing of the request for the retransmission and retransmission processing executed by the retransmission request receiving unit 12 and retransmission processing unit 13. When the retransmission request receiving unit 12 receives the request for retransmission transmitted by the unicast from any one of the plurality of receiving terminals 3 (step S31), the retransmission request receiving unit 12 generates a thread in which the retransmission processing unit 13 is performed. By this, the retransmission processing unit 13 initiates the processing. That is, the retransmission processing unit 13 read out the data (data specified in the request) to be retransmitted from the retransmission data cash memory 14 (step S32), starts to retransmit the data (individually or by the unicast) to the receiving terminals 3 which transmitted the request for retransmission (step S33). When the retransmission processing unit 13 completes the retransmission of the read out data, the retransmission processing unit 13 finishes the processing (step S34), and extinguishes the thread.

Prior to the multicast and individual retransmission, communication for exchanging the information (or handshake) is performed only one time between the multicast communication apparatus 1 and each of the receiving terminals 3. In this handshake, information transmitted from the transmitting device to the receiving device is the "serial numbers" (or the information which shows the serial numbers use in the multicast data), and a "transmitting terminal identifying number." On the other hand, information transmitted from the receiving device to the transmitting device is a "receiving device identifying number" and a "destination address and port number of data retransmission." The multicast communication apparatus 1 stores the information obtained as a result of handshaking in a memory as a record comprising the "receiving device identifying number, destination address of the retransmission, and destination port number of the retransmission," and performs the retransmission based on the information.

Further, prior to handshaking, the multicast communication apparatus 1 and the plurality of receiving terminals 3 share or store in a memory a "multicast addresses and multicast port numbers for transmitting and receiving data," "multicast addresses and multicast port numbers for transmitting and receiving control data," and "destination addresses and destination port numbers for the request for retransmitting." During handshaking, "multicast addresses and multicast port numbers for transmitting and receiving control data," and "destination addresses and destination port numbers for the request for retransmitting" are used.

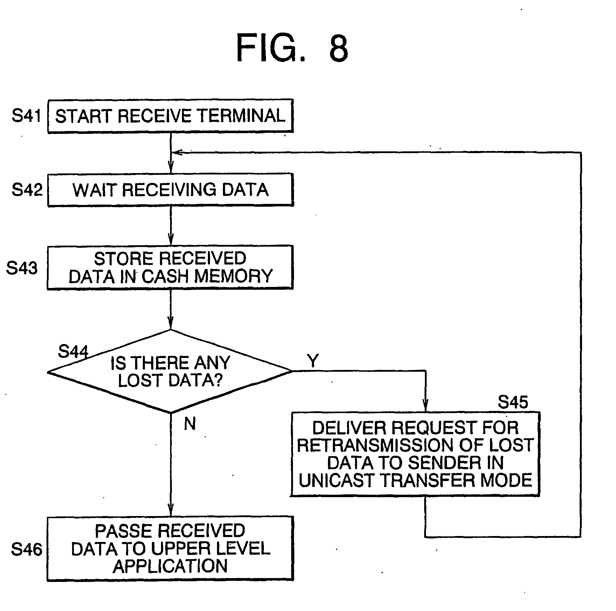

FIG. 8 shows a flowchart of receiving processing in each of the receiving terminals 3. When the receiving terminal 3 (receiving device) is activated (step S41), it becomes a waiting state to receive data (step S42). In this state, the receiving terminal 3 receives data transmitted by the multicast communication apparatus 1. The received data is data by the multicast or data retransmitted by the unicast. The receiving terminal 3 stores the received data in a data cash memory (not illustrated) temporarily (step S43), then decides whether there is any lost data by investigating the serial numbers attached to the data packets(step S44). When there is lost data, the receiving terminal 3 generates the request for retransmission including the serial numbers of the lost packet, and transmits the request for retransmission by the unicast to the multicast communication apparatus 1 (transmitting device) (step S45). Then, the receiving terminal 3 repeats the step S42 and succeeding steps. When there is no lost data, the receiving terminal 3 passes the received data to the upper level application program (step S46).

Incidentally, before the receiving terminal 3 becomes into the waiting state in the step S42, the receiving terminal 3 may transmit a request for transmission of data to the multicast communication apparatus 1. This request for transmission of data may be transmitted by the multicast, for example.

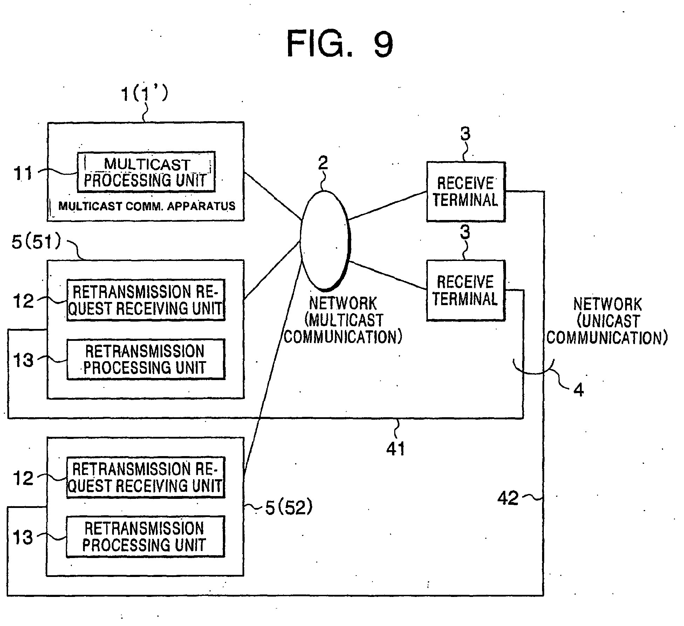

FIG. 9 shows the structure of another multicast communication system which has a server only for retransmitting.

When the receiving terminals 3 to receive data by the multicast are numerous, e.g., 500 to 1000 in number, as shown in FIG. 9, one or a plurality of servers 5 (51, 52, ...) are provided only for the retransmission. That is, the multicast processing unit 11 is provided as an independent server 1' only for transmitting data by the multicast. The retransmission request receiving unit 12 and retransmission processing unit 13 are provided as an independent server 5 only for processing the request for retransmitting and for processing the retransmitting. As a result of this feature, it is possible to reduce the load of processing in the multicast communication apparatus 1 (or 1'). In this embodiment, the data retransmission cash memory 14 is shared by the multicast communication apparatus 1 and the plurality of servers 5 only for retransmission.

This embodiment is provided with (one or) a plurality of servers 5 only for retransmission. Thus, each of the plurality of receiving terminals 3 may be connected to different servers 5 (51, 52, ...), which are the destination of the request for retransmission. Accompanying with this feature, network 4 (41, 42, ...) only for the unicast has also different routes connected to the appropriate servers 5. As a result of this feature, it is possible to distribute the processing of the requests for the retransmission, and then to reduce the load of each of the plurality of servers 5.

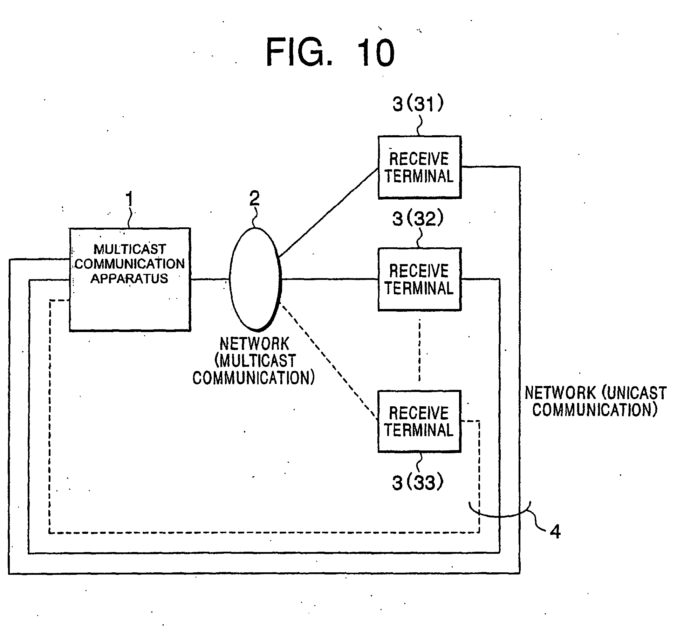

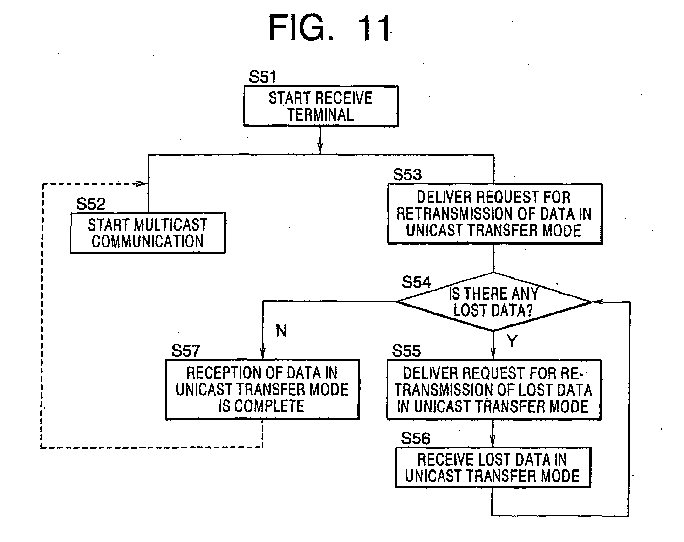

FIGS. 10 and 11 show the structure of another multicast communication system and a flowchart thereof, and more specifically show the case that a receiving terminal newly participating (newly participating receiving terminal) to an ongoing multicast communication starts to receive the data multicast.

In FIG. 10, the multicast communication system is structured by two receiving terminals 3 (31, 32), and data transmission has been already started by the multicast. In this state, as shown in FIG. 10 by dotted line, a receiving terminal 3 (33) is newly connected to the multicast communication system. The newly participating receiving terminal 33 starts to receive data by the multicast in the middle of the multicast transmission, and tries to recover previously transmitted data by the multicast (or data not yet received) by using the request for retransmission in the data lost. Then, in this case, the newly participating receiving terminal 33 transmits by the unicast the request for retransmission which specifies the data not yet received to the multicast communication apparatus 1.

In FIG. 11, when the newly participating receiving terminal 33 (receiving device) is (step S51), the receiving terminal 33 starts to receive data by the multicast from the multicast communication apparatus 1, from that moment on (in the middle of the multicast transmission), by similarly steps as in step S42 and successive steps in FIG. 8 (step S52). At the same time, the receiving terminal 33 starts to process the request for retransmission (step S53), and decides whether there is any data which has not been received yet in the data to be transmitted by the multicast, by investigating the data received and stored in a data cash memory in step S52 (step S54). When there is data not yet received, the newly participating receiving terminal 33 transmits by the unicast individually the request for retransmission of the lost data to the multicast communication apparatus 1 (step S55). Then, the receiving terminal 33 receives individually the requested data and stores the data in data cash memory (step S56), and repeats the step S54 and succeeding steps. When there is no data not yet received in the step S54, the newly participating receiving terminal 33 finishes the processing of receiving the data individually (step S57), and then performs the step S52 and succeeding steps, as shown in FIG. 11 by the dotted line.

### Industrial Applicability

As described above, according to the present invention, in the multicast communication apparatus, method and system, when any one of the plurality of receiving terminals finds the data is lost, the communication to recover the lost data only between the multicast communication apparatus and the receiving terminals. Accordingly, the request for retransmission and the retransmitted data, which are unnecessary data, are not multicast to the network to which the receiving terminals in which the data is not lost belongs. By this feature, in a network which is actually used in a company or the like, it is possible to prevent from generating the load of unnecessary communication, to prevent from imposing communication charges due to unnecessary communication, and to improve the security. In addition, when data transmission by the multicast has been already started, it is possible to retransmit the data which has been already multicast by accepting the request for retransmission to the new receiving terminal (the newly participating receiving terminal). As a result of this, it is possible for the newly participating receiving terminal to successfully participate to the multicast network in the middle of the multicast communication.

According to the present invention, the multicast communication program can realize the multicast communication apparatus, method and system described above. Then, similarly with the above described, in a network which is actually used in a company or the like, it is possible to prevent from generating the load of unnecessary communication, to prevent from imposing communication charges due to unnecessary communication, and to improve the security. In addition, it is possible to retransmit the data which has been already multicast by accepting the request for retransmission to the newly participating receiving terminal, and to successfully participate to the multicast network in the middle of the multicast communication.

According to the present invention, it is possible to provide the multicast communication program in a recording medium, so that it is easy to realize the multicast communication apparatus and method described above.

## Claims

1. A multicast communication apparatus comprising:
a multicast processing unit to transmit by multicast one or a plurality of data to a plurality of receiving terminals;
a retransmission request receiving unit to receive a request for retransmission which specifies at least one data out of the one or the plurality of data transmitted by the multicast and which is transmitted by unicast from any one of the plurality of receiving terminals; and
a retransmission processing unit to transmit by the unicast the specified data in the request for retransmission to the any one of the plurality of receiving terminals which transmitted the request for retransmission.

2. A multicast communication apparatus according to claim 1 wherein the multicast processing unit corrects transmission rate successively during transmission by the multicast in order that the transmission rate approximates to the specified rate.

3. A multicast communication apparatus according to claim 1 wherein the multicast processing unit corrects the transmission rate successively during transmission of data specified in the request for retransmission in order that the transmission rate approximates to the specified rate.

4. A multicast communication apparatus according to claim 1 wherein the multicast processing unit divides single data into a plurality of packets each having a predetermined size, and assigns serial numbers to each of the plurality of packets, in the application layer.

5. A multicast communication apparatus according to claim 1,
wherein the multicast processing unit is provided as an independent server only for transmitting data by the multicast, and
wherein the data retransmission request receiving unit and the retransmission processing unit are provided as an independent server only for processing the request for retransmission and processing the retransmission.

6. A multicast communication method comprising:
transmitting by the multicast one or a plurality of data to a plurality of receiving terminals;
receiving a request for retransmission which specifies at least one data out of the one or plurality of data transmitted by the multicast and which is transmitted by unicast from any one of the plurality of receiving terminals; and
transmitting by the unicast the specified data in the request for retransmission to the any one of the plurality of receiving terminals which transmitted the request for retransmission.

7. A multicast communication system comprising:
a multicast communication apparatus; and
a plurality of receiving terminals connected thereto,
wherein each of the plurality of receiving terminals receives one or a plurality of data transmitted by the multicast from the multicast communication apparatus, and, when any one of the one or plurality of data is lost, transmits by the unicast a request for retransmission which specified the lost data, and
wherein the multicast communication apparatus further comprises:
a multicast processing unit to transmit by multicast the one or plurality of data to the plurality of receiving terminals;
a retransmission request receiving unit to receive the request for retransmission which is transmitted by unicast from any one of the plurality of receiving terminals; and
a retransmission processing unit to transmit by the unicast the specified data in the request for retransmission to the any one of the plurality of receiving terminals which transmitted the request for retransmission.

8. A multicast communication system according to claim 7 wherein each of the plurality of receiving terminals corrects the transmission rate successively during retransmission of data specified in the request for retransmission in order that the transmission rate approximates to the specified rate.

9. A multicast communication system according to claim 7,
wherein the multicast processing unit divides single data into the plurality of packets each having a predetermined size, and assigns serial numbers to each of the plurality of packets, in the application layer, and
wherein each of the plurality of receiving terminals combines the plurality of packets according to the serial numbers into single data, in the application layer.

10. A multicast communication system according to claim 7 wherein each of the plurality of receiving terminals transmits by unicast a request for retransmission which specifies the data not yet received to the multicast communication apparatus, when the receiving terminal starts to receive data transmitted by the multicast after start of data transmission by the multicast from the multicast communication apparatus.

11. A program for realizing a multicast communication system, the program comprising the steps which cause a computer to execute:
transmitting by multicast one or a plurality of data to a plurality of receiving terminals;
receiving a request for retransmission which specifies at least one data out of the one or the plurality of data transmitted by the multicast and which is transmitted by unicast from any one of the plurality of receiving terminals; and
transmitting by the unicast the specified data in the request for retransmission to the any one of the plurality of receiving terminals which transmitted the request for retransmission.

12. A program recording medium recording a program for realizing a multicast communication apparatus, the program comprising the steps which cause a computer to execute:
transmitting by multicast one or a plurality of data to a plurality of receiving terminals;
receiving a request for retransmission which specifies at least one data out of the one or the plurality of data transmitted by the multicast and which is transmitted by unicast from any one of the plurality of receiving terminals; and
transmitting by the unicast the specified data in the request for retransmission to the any one of the plurality of receiving terminals which transmitted the request for retransmission.
